# EUROPEAN PATENT APPLICATION

(11) **EP 4 096 218 A1**
(43) Date of publication of application: **30.11.2022**
(21) Application number: 21750082.6
(22) Date of filing: 28.01.2021
(51) Int. Cl.: H04N 5/92, H04N 5/77, H04N 5/907, H04N 5/232, H04N 5/247, H04M 1/02

(54) **VIDEO RECORDING METHOD USING PLURALITY OF CAMERAS, AND DEVICE THEREFOR**

(30) Priority: 07.02.2020 KR 20200015098
(71) Applicant: Samsung Electronics Co., Ltd., Gyeonggi-do, 16677 (KR)
(72) Inventor: LEE, Hyunmin, Suwon-si, Gyeonggi-do 16677 (KR); SEO, Kyungyul, Suwon-si, Gyeonggi-do 16677 (KR); KANG, Changhoon, Suwon-si, Gyeonggi-do 16677 (KR); WON, Jonghoon, Suwon-si, Gyeonggi-do 16677 (KR)
(74) Representative: HGF
(86) International application number: PCT/KR2021/001144
(87) International publication number: WO 2021/157954

(57) **Abstract**

Disclosed is an electronic device comprising a display, a first camera module, a second camera module, a memory, and a processor. The electronic device may: execute a first application; set the first camera module on the basis of first configuration information in response to entering a video recording mode; record, in a video file, first video data acquired through the first camera module in response to a recording start event; while an image designated to the display is output to the display in response to a camera switching event, (1) stop the recording of the first video data through the first camera module and (2) set a second camera module on the basis of second configuration information which is at least partially identical to the first configuration information; and continuously record, on the first video data, second video data acquired through the second camera module in response to a recording resumption event.

## Description

### [Technical Field]

Embodiments disclosed herein relate to a technology for capturing and storing moving images by using multiple cameras included in an electronic device.

### [Background Art]

A mobile device such as a smartphone or a tablet includes a camera for capturing photographs and moving images. A recently available mobile device may have cameras mounted on the front and rear surfaces of the mobile device, respectively.

A mobile device may capture photographs or moving images by using a camera mounted on the front or rear surface. For example, the mobile device may use the camera mounted on the rear surface to photograph an object, or may use the camera mounted on the front surface to capture selfie images or the like.

### [Disclosure of Invention]

### [Technical Problem]

When moving images are captured by an existing mobile device, front/rear camera switching is not supported during capture. Front and rear cameras commonly have different hardware structures and performances, and settings applied to video capture are not guaranteed if the cameras are switched. In addition, camera switching is not supported during moving image capture because the encoder cannot be maintained from a software point of view while the camera module is activated/deactivated. Therefore, the user needs to capture a moving image by using the rear camera, needs to capture an additional moving image by using the front camera after the moving image capture is ended, and needs to combine the moving image captured with the rear camera and the moving image captured with the front camera later by using a separate video editing program or the like. According to the prior art, in order to generate video data by using front/rear cameras, complicated user manipulations during the capture and postprocessing operations after the capture are necessary, and audio data is lost while the capture is ended in the middle.

Various embodiments disclosed herein may provide a device and a method wherein, even when a moving image is captured with a mobile device supporting multiple cameras, camera switching is supported, and user experiences are improved.

### [Solution to Problem]

An electronic device according to an embodiment disclosed herein may include: a display; a first camera module; a second camera module; a memory; and at least one processor electrically connected to the display, the first camera module, the second camera module, and the memory, wherein the at least one processor executes a first application associated with the first camera module and the second camera module, sets the first camera module, based on first configuration information in response to entering a video recording mode, records first video data obtained via the first camera module on a video file in response to a recording event, outputs a designated image on the display in response to a camera switching event which occurs while recording the first video data, while the designated image is output on the display, (1) stops recording the first video data via the first camera module and (2) sets the second camera module, based on second configuration information at least partially identical to the first configuration information, and continuously records, on the first video data of the video file, second video data obtained via the second camera module in response to a recording resumption event.

In addition, a moving image capturing method of an electronic device according to an embodiment disclosed herein may include executing a first application associated with a first camera module and a second camera module of the electronic device, setting the first camera module, based on first configuration information, in response to entering a video recording mode, recording first video data obtained via the first camera module on a video file in response to a recording event, outputting a designated image on the display of the electronic device in response to a camera switching event which occurs while recording the first video data, while the designated image is output on the display, (1) stopping recording the first video data via the first camera module and (2) setting the second camera module, based on second configuration information at least partially identical to the first configuration information, and continuously recording, on the first video data of the video file, second video data obtained via the second camera module in response to a recording resumption event.

In addition, an electronic device according to an embodiment disclosed herein may include: a housing; a display; a first camera module including a first lens set; a second camera module including a second lens set; a processor operatively connected to the first camera module and the second camera module; and a memory operatively connected to the processor, wherein when the memory stores instructions which cause the processor, when executed, to obtain a first image via the first camera module, based on a first setting value mapped to the first camera module in response to a moving image capturing request, generate a preview image, based on the obtained first image and display the preview image on the display, record the first image as a moving image, receive an input requesting a switch to the second camera module during the recording of the first image, pause the moving image recording in response to the received input, provide a switching effect image as a preview image, switch to the second camera module, adjust the first setting value to a second setting value mapped to the second camera module in response to the switching to the second camera module, after the adjustment is completed, obtain a second image via the second camera module, based on the second setting value, and provide a preview image, based on the obtained second image and record the second image to be continuous with the paused first image so as to resume recording the moving image.

### [Advantageous Effects of Invention]

According to various embodiments disclosed herein, camera switching between front and rear cameras of an electronic device may be provided during moving image capture.

In addition, according to various embodiments, a user may generate a video file captured with front and rear cameras without using a separate editing program.

In addition, according to various embodiments, in connection with a video file captured with front and rear cameras, a natural switching effect may be provided when a video captured with the front camera and a video captured with the rear camera are switched.

In addition, according to various embodiments, the directivity or gain of a microphone may be adjusted when front and rear cameras are switched to each other, thereby providing audio data optimized for the capture direction.

Various other advantageous effects identified explicitly or implicitly through the discourse may be provided.

### [Brief Description of Drawings]

FIG. 1 illustrates an electronic device according to an embodiment.
FIG. 2 illustrates a hardware configuration of an electronic device according to an embodiment.
FIG. 3 illustrates the concept of controlling functions related to the capturing by an electronic device according to an embodiment.
FIG. 4 is a flowchart illustrating a moving image capturing method according to an embodiment.
FIG. 5 illustrates a user interface output on a display of an electronic device according to an embodiment.
Fig. 6 is a flowchart illustrating that the video recording resumes after a camera switching event occurs according to an embodiment.
FIG. 7 is a view illustrating the video recording according to a flow of time according to an embodiment.
FIG. 8 is a flowchart illustrating a method for generating and storing a video file according to an embodiment.
FIG. 9 is a block diagram of an electronic device 901 in a network environment 900 according to various embodiments.
FIG. 10 is a block diagram 100 exemplifying a camera module 980 according to various embodiments.

In connection with the description of the drawings, the same or similar reference numerals may be used for the same or similar components.

### [Mode for Carrying out the Invention]

Hereinafter, various embodiments will be described with reference to the accompanying drawings. However, this is not intended to limit the specific embodiments, and it should be understood that various modifications, equivalents, and/or alternatives of the embodiments are included.

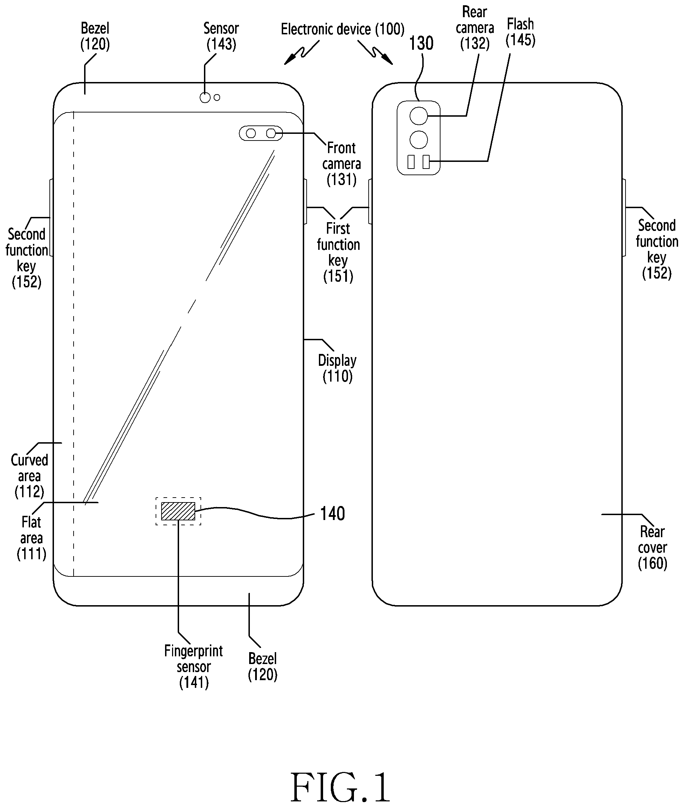

FIG. 1 illustrates an electronic device according to an embodiment.

Referring to FIG. 1, a display 110 may be disposed on the front surface of the electronic device 100 according to an embodiment. In an embodiment, the display 110 may occupy most of the front surface of the electronic device 100. The display 110 and a bezel 190 area surrounding at least a part of the edge of the display 110 may be disposed on the front surface of the electronic device 100. In an example in FIG. 1, the display 110 may include a flat area 111 and a curved area 112 extending from the flat area 111 toward the side surface of the electronic device 100. Although the curved surface area 112 is displayed only on one side (e.g., the left side) in FIG. 1, it may be understood that the curved surface area is identically configured on the opposite side. In addition, the electronic device 100 illustrated in FIG. 1 is one example, and various embodiments are possible. For example, the display 110 of the electronic device 100 may include only a flat area 111 without a curved area 112, or may include a curved area in only one edge but not both edges. Further, in an embodiment, the curved area may extend to the rear surface of the electronic device 100, and thus the electronic device 100 may include an additional flat area.

In an embodiment, a fingerprint sensor 141 for recognizing a user's fingerprint may be included in a first region 140 of the display 110. The fingerprint sensor 141 may be disposed on a layer below the display 110, and thus may be disposed not to be viewed by a user or to be difficult to be viewed. Further, an additional sensor for user/biometric authentication in addition to the fingerprint sensor 141 may be disposed in a partial region of the display 110. In another embodiment, the sensor for user/biometric authentication may be disposed in one region of a bezel 120. For example, an infrared (IR) sensor for iris authentication may be exposed through one region of the display 110 or exposed through one region of the bezel 120.

In an embodiment, a front camera 131 may be disposed on the front surface of the electronic device 100. In the embodiment of FIG. 1, it is illustrated that the front camera 131 is exposed through one region of the display 110. However, in another embodiment, the front camera 131 may be exposed through the bezel 120.

In an embodiment, the electronic device 100 may include at least one front camera 131. For example, the electronic device 100 may include two front cameras such as a first front camera and a second front camera. In an embodiment, the first front camera and the second front camera may be the same type of cameras having an identical specification (e.g., pixels), but the first front camera and the second front camera may be implemented as different cameras having different specifications. The electronic device 100 may support functions (e.g., 3D capturing, auto focus, etc.) related to a dual camera via two front cameras.

In an embodiment, a rear camera 132 may be disposed on the rear surface of the electronic device 100. The rear camera 132 may be exposed through a camera area 130 of a rear cover 160. In an embodiment, the electronic device 100 may include a plurality of rear cameras disposed in the camera area 130. For example, the electronic device 100 may include two or more rear cameras. For example, the electronic device 100 may include a first rear camera, a second rear camera, and a third rear camera. The first rear camera, the second rear camera, and the third rear camera may have different specifications. For example, the first rear camera, the second rear camera, and/or the third rear camera may be different in terms of FOV, pixels, apertures, whether to support an optical zoom/digital zoom, whether to support an image stabilization function, kinds and arrangement of lens set included in each camera, and the like. For example, the first rear camera may be an ordinary camera, and the second rear camera may be a camera for wide capturing, and the third rear camera may be a camera for telephotographing. In the disclosure, the description about the function or characteristics of the front camera may be applied to the rear camera, and vice versa.

In an embodiment, various hardware such as a flash 145 for assisting with the capturing or a sensor may be additionally disposed in the camera area 130. For example, a distance sensor (e.g., a TOF sensor) for detecting a distance between a subject and the electronic device 100 or the like may be further included.

In an embodiment, at least one physical key may be disposed on the side surface of the electronic device 100. For example, a first function key 151 configured to turn the display ON/OFF or turn the power of the electronic device 100 ON/OFF may be disposed on a right edge with reference to the front surface of the electronic device 100. In an embodiment, a second function key 152 configured to control a volume, screen brightness, or the like of the electronic device 100 may be disposed on a left edge with reference to the front surface of the electronic device 100. In addition, an additional button or key may be disposed on the front surface or the rear surface of the electronic device 100. For example, a physical button or a touch button mapped to a specific function may be disposed on a lower end area of the bezel 120 on the front surface.

The electronic device 100 illustrated in FIG. 1 corresponds to one example and does not limit the type of a device to which the technical spirit disclosed herein is applied. The technical spirit disclosed herein is applicable to various user devices including a first camera module facing a first direction and a second camera module facing a direction different from the first direction. For example, by employing a flexible display 110 or a hinge structure, the technical spirit disclosed herein may also be applied to a foldable electronic device which can be folded in a horizontal direction or vertical direction, a tablet computer, or a laptop computer. In addition, the technical spirit of the disclosure may be applied to a case in which a first camera module and a second camera module facing the same direction are disposed to face different directions by rotation, folding, deformation, or the like of a device.

Hereinafter, various embodiments will be described with reference to the electronic device 100 illustrated in FIG. 1 for convenience of description.

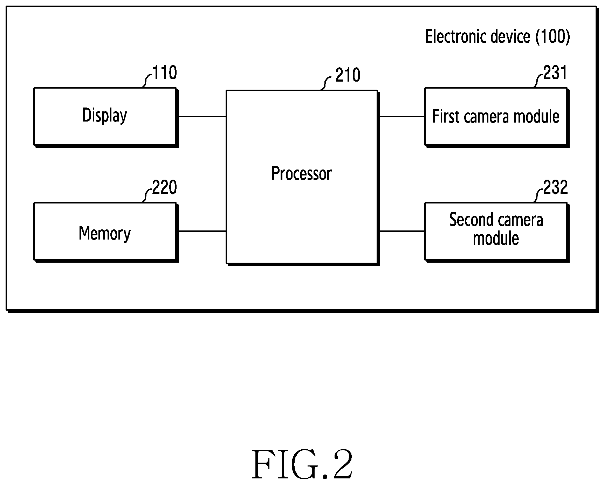

FIG. 2 illustrates a hardware configuration of an electronic device according to an embodiment.

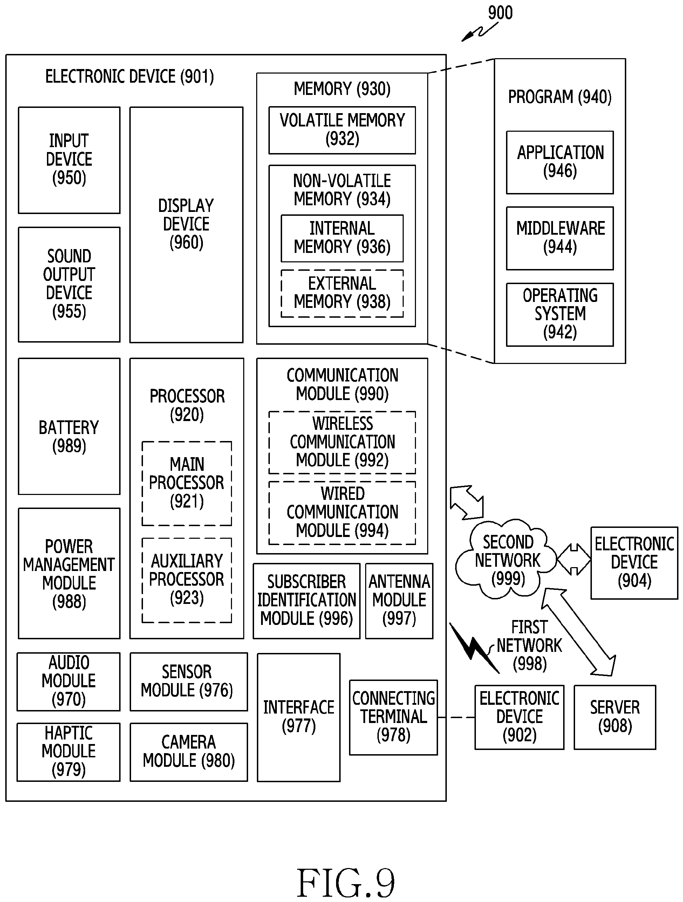

Referring to FIG. 2, in an embodiment, the electronic device 100 may include a processor 210, a display 110, a memory 220, a first camera module 231, and a second camera module 232. The elements illustrated in FIG. 2 are exemplary, and the electronic device 100 may further include additional elements. For example, the electronic device 100 may further include at least one microphone configured to record audio data. For example, the electronic device 100 may include at least one sensor configured to determine a direction in which the front surface or the rear surface of the electronic device 100 faces and/or the posture information of the electronic device 100. In an embodiment, the at least one sensor may include an acceleration sensor, a gyro sensor, or the like. A specific description of the hardware which is included or may be included in the electronic device 100 in FIG. 2 is provided with reference to FIG. 9.

In an embodiment, the display 110 may display an execution screen of an application executed by the processor 210 or contents such as an image and/or a video stored in the memory 220. Furthermore, image data obtained via the first camera module 231 and the second camera module 232 may be displayed on the display 110 in real time.

In an embodiment, the display 110 may be implemented integrally with a touch panel. The display 110 may support a touch function, detect a user input such as touch using a finger, and transmit the same to the processor 210. The display 110 may be connected to a display driver integrated circuit (DDIC) for driving the display 110, and the touch panel may be connected to a touch IC which detects touch coordinates and processes touch-related algorithms. In an embodiment, the display driver integrated circuit and the touch IC may be integrally configured, and in another embodiment, the display driver integrated circuit and the touch IC may be separately configured. The display driver integrated circuit and/or the touch IC may be electrically connected to the processor 210.

In an embodiment, the processor 210 may execute/control various functions supported by the electronic device 100. For example, the processor 210 may execute a code, written in a programing language and stored in the memory 220, to execute an application and control various types of hardware. For example, the processor 210 may execute an application which supports a capturing function and is stored in the memory 220. Further, the processor 210 may execute the first camera module 231 or the second camera module 232, and may configure and support an appropriate capturing mode such that the first camera module 231 or the second camera module 232 can perform an operation desired by a user.

In an embodiment, the memory 220 may store instructions which can be executed by the processor 210. The memory 220 may be understood as a concept including an element, such as random access memory (RAM), in which data is temporarily stored, and an element, such as a solid state drive (SSD), in which data is permanently stored. For example, the processor 210 may call instructions stored in the SSD to implement a software module in a RAM space. In various embodiments, various types of memory 220 may be included, and the appropriate type thereof may be adopted according to the use of a device.

In an embodiment, an application associated with the first camera module 231 or the second camera module 232 may be stored in the memory 220. For example, a camera application may be stored in the memory 220. The camera application may support various capturing functions such as photographing, moving image capturing, panoramic capturing, and slow motion capturing.

In an embodiment, the application associated with the first camera module 231 or the second camera module 232 may correspond to various types of applications. For example, a chatting application, a web browser application, an e-mail application, a shopping application, or the like may use the first camera module 231 and the second camera module 232 in order to support a video call, photo/video attachment, a streaming service, and a product image or a product-related virtual reality (VR) capturing function.

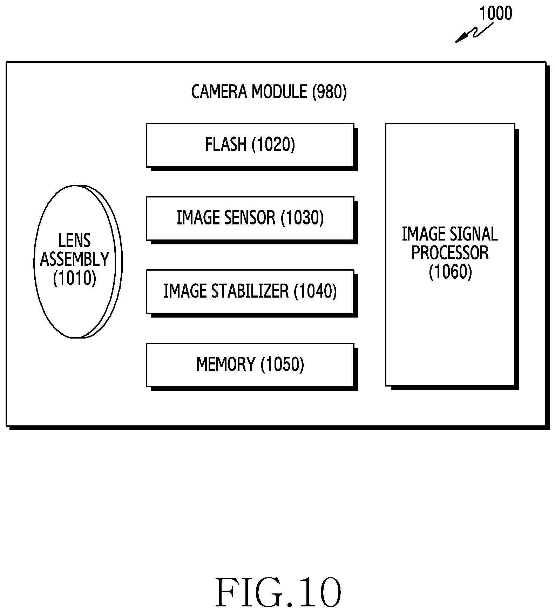

In an embodiment, the first camera module 231 may include the rear camera 132 in FIG. 1. The second camera module 232 may include the front camera 131 in FIG. 1. The first camera module 231 may include a plurality of camera modules, and each camera module may include a lens set including a plurality of lenses. A detailed description of the camera module is provided with reference to FIG. 10, and the description of FIG. 10 may be applied to both the first camera module 231 and the second camera module 232.

In an embodiment, the first camera module 231 may include a plurality of camera modules, a part of the plurality of camera modules may be sequentially activated. For example, when the first camera module 231 includes three rear cameras, the second rear camera may be activated with the first rear camera, and the electronic device 100 may output a preview image obtained via the first rear camera on the display 110. In an embodiment, when an input for controlling an optical/digital zoom function such as a zoom-in input is obtained from a user, the processor 210 may output a preview image acquired via the second rear camera (e.g., a wide capturing camera), which has higher performance than the first rear camera and has been already activated, on the display 110. When the preview image acquired via the second rear camera is output on the display 110, the processor 210 may deactivate the first rear camera and activate the third rear camera so as to previously prepare for an additional magnification input. In another embodiment, when the preview image acquired via the second rear camera is output on the display 110, the processor 210 may maintain a state where all of the first rear camera, the second rear camera, and the third rear camera are activated. In this state, when the preview image acquired via the third rear camera (e.g., a telephotographic camera) starts to be output on the display 110, the processor 210 may maintain a state where the first rear camera is deactivated, and the second rear camera and the third rear camera are activated. However, in still another embodiment, when the conditions for driving all the rear camera modules at the same time are satisfied, such as when sufficient power is supplied to the electronic device 100, the electronic device 100 may always keep all of the first rear camera module, the second rear camera module, and the third rear camera module in the activated state.

In an embodiment, the second camera module 232 may include one or more camera modules. When the second camera module 232 includes two or more cameras, the above description of the activation algorithm with respect to the first camera module 231 may also be applied to the first camera module 231.

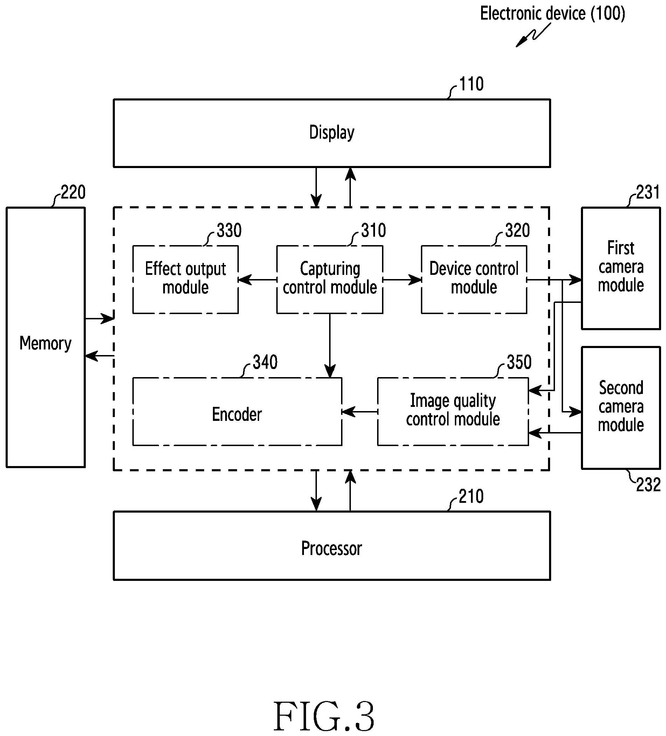

FIG. 3 illustrates the concept of controlling functions related to capturing by an electronic device according to an embodiment.

Referring to FIG. 3, the electronic device 100 may use hardware and/or software modules to support various capturing-related functions. For example, the processor 210 may execute an instruction stored in the memory 220 so as to drive an effect output module 330, a capturing control module 310, a device control module 320, an encoder 340, and an image quality control module 350. In various embodiments, a software module different from that illustrated in FIG. 3 may be implemented. For example, at least two modules may be integrated into one module, or one module may be split into two or more modules. The hardware and software modules may divide up one function to improve work performance. For example, the electronic device 100 may include both an encoder implemented by hardware and an encoder implemented by a software module, and a part of the data obtained via at least one camera module may be processed by the hardware encoder and the other part thereof may be processed by the software encoder.

In an embodiment, the capturing control module 310 may provide a user interface (UI)/graphical UI (GUI) related to the camera to the user via the display 110. The capturing control module 310 may control the capturing operation in response to the user input provided via the UI/GUI output on the display 110. For example, the capturing control module 310 may obtain a recording start/stop input from the user and transmit the obtained recording start/stop input to the encoder 340. The capturing control module 310 may transmit a pause/resume command to the encoder 340 when the camera module is switched from the first camera module 231 to the second camera module 232. In an embodiment, the capturing control module 310 may generate a switching screen to provide a natural visual effect when switching camera modules, and may provide the generated switching screen to the effect output module 330.

In an embodiment, the device control module 320 may perform activation and deactivation of the first camera module 231 and/or the second camera module 232, and configuration of each camera module according to the command provided from the capturing control module 310. The device control module 320 may apply effects such as left/right rotation and up/down rotation when switching the camera module so as to record with the same orientation before and after the switching.

In an embodiment, the effect output module 330 may output the preview image obtained from the first camera module 231 and the second camera module 232 and the effect applied by the capturing control module 310 on the display 110. In order to prevent the blinking, which can occur when or while switching the camera module between the first camera module 231 and the second camera module 232, or an unnatural screen, which can occur during a stabilization operation according to the camera module, from being exposed to the user, the effect output module 330 may output the switching screen generated by the capturing control module 310 on the display 110, and may maintain the output state until the switching of the cameras is completed.

In an embodiment, the encoder 340 may encode the image or frame data obtained via the first camera module 231 and the second camera module 232 so as to generate a video file. The encoder 340 may perform operations such as recording start, recording stop, recording pause, and recording resumption.

In an embodiment, the image quality control module 350 may perform a stabilization operation on the images obtained from the first camera module 231 and/or the second camera module 232. In an embodiment, the stabilization operation may include at least one of auto exposure (AE), auto focus (AF), and auto white balance (AWB). The image quality control module 350 may improve the quality of the image obtained by appropriate image quality adjustment/tuning operation in addition to auto exposure, auto focus, and/or auto white balance, or may apply desired effects thereto.

In an embodiment, in FIG. 3, it may be understood that the functions, which are performed by the capturing control module 310, the device control module 320, the effect output module 330, the encoder 340, and the image quality control module 350, are performed by the processor 210 executing the instructions stored in the memory 220. In various embodiments, the electronic device 100 may use one or more hardware processing circuits to perform the various functions and operations disclosed herein. For example, an application processor (AP) included in a mobile device, an image signaling processor (ISP) mounted in a camera module, a DDIC, a touch IC, a communication processor (CP), a hardware encoder, and the like may be used to implement various embodiments disclosed herein. In the disclosure, the processor 210 may be understood as including at least one processor described above.

The connection relationship between the hardware/software illustrated in FIG. 3 is for convenience of description and does not limit the flow/direction of data or commands. The elements included in the electronic device 100 may have various electrical/operative connection relationships.

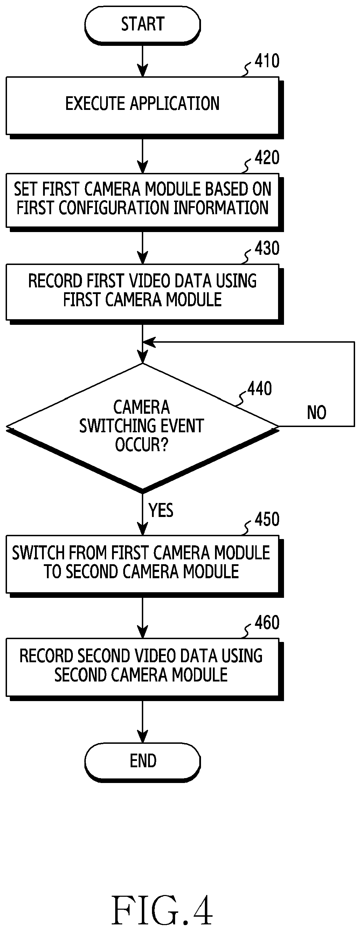

FIG. 4 is a flowchart illustrating a moving image capturing method according to an embodiment. It will be understood that various embodiments provided with respect to FIG. 4 and the drawings described below are performed by the electronic devices 100 illustrated in FIG. 1, FIG. 2, and FIG. 3.

According to an embodiment, in operation 410, the electronic device 100 may execute an application. In an embodiment, the application may be an application related to the first camera module 231 and the second camera module 232. For example, the processor 210 of the electronic device 100 may execute a camera application or any application which supports a camera function.

In an embodiment, when the application is executed, the electronic device 100 may output the application execution screen on the display 110. In an embodiment, when the application is a camera application, the preview screen obtained by a camera (e.g., the first camera module 231) automatically determined as the application is executed may be output on the display 110. In another embodiment, the application is a call application or a messenger application supporting a camera function, after the execution screen of the messenger application or the call application is output on the display 110, the preview screen obtained by the camera (e.g., the second camera module 232) finally used at a time point when entering the capturing mode or when the capturing function is selected by the user may be output on the display 110. The disclosure mainly describes an example in which the preview screen obtained by the first camera module 231 is output on the display 110 in response to the execution of the application.

According to an embodiment, when the application is executed and a video recording is requested, the electronic device 100 may configure the first camera module 231, based on first configuration information in operation 420. For example, when entering the video recording mode by user input after the application is executed or in an automatic manner when the application is executed, the processor 210 may configure the first camera module 231, based on the first configuration information. The first configuration information may include various parameters related to video recording. For example, the first configuration information may include a setting value such as the resolution of the recorded video, the frame rate of the video, and the filters applied to the video.

According to an embodiment, when the recording start event occurs after the setting of the first camera module 231 is completed, in operation 430, the electronic device 100 may record first video data based on the first configuration information. For example, the processor 210 may record the first video data having a resolution of 800^{∗}600 and a frame rate of 60 fps.

In an embodiment, the recording start event may be a recording start command obtained from the user. For example, when the user selects a capturing button displayed on the display 110 or provides a predefined voice command so as to command the start of recording, the electronic device 100 may determine that the recording start event has occurred, and start recording the first video data. In another embodiment, the recording start event may mean that the setting of the first camera module 231 is completed, and in this case, the processor 210 may start recording the first video data without a separate user input as soon as the setting of the first camera module 231 is completed,

In an embodiment, while the first video data is recorded by the first camera module 231, the preview image obtained by the first camera module 231 is continuously output on the display 110 of the electronic device 100. When the recording start event occurs, the electronic device 100 activates at least one microphone included in the electronic device 100, and at least one pre-activated microphone may be used to obtain audio data until a recording end event occurs.

According to an embodiment, while recording the first video data using the first camera module 231, in operation 440, the electronic device 100 may determine whether or not a camera switching event occurs. When the camera switching event does not occur, the processor may continuously record the first video data using the first camera module 231 until the recording end event occurs.

In an embodiment, the camera switching event may be to detect an input for selecting a menu corresponding to camera switching among the menus output on the display 110. However, in various embodiments, the camera switching event may be defined in various ways. For example, recognition of a voice command mapped to a camera switching event, detecting the movement of the device corresponding to the predefined pattern by the sensor included in the electronic device 100, receiving a camera switching command from another device (e.g., a wearable electronic device, an electronic pen, a wireless keyboard, etc.) connected to the electronic device 100 via a predetermined communication (e.g., Bluetooth), and the like may correspond to the camera switching event.

According to an embodiment, in response to the camera switching event, the electronic device 100 may switch the camera module from the first camera module 231 to the second camera module 232. While the camera module is switched, the electronic device 100 may perform various operations such as outputting a switching screen, stopping recording by the first camera module 231, setting the second camera module 232, and stabilizing the second camera module 232. For example, the processor 210 may output a designated image defined as the switching screen on the display in response to the camera switching event, stop recording the first video data via the first camera module 231 while maintaining the output of the designated image, and set the second camera module based on the second configuration information. Here, at least a part of the second configuration information may be the same as the first configuration information. For example, when the first configuration information defines a resolution of 800^{∗}600 and a frame rate of 60 fps, the second configuration information may also be defined to have defines a resolution of 800^{∗}600 and a frame rate of 60 fps. As the second configuration information is defined at least partially identical to the first configuration information and the second camera module 232 is set by the defined second configuration information, it is possible to remove the heterogeneity between the video data recorded before and after switching the camera module.

In an embodiment, the first configuration information may include a first parameter and a second parameter, and the first parameter may be a parameter to be essentially set identical when switching the cameras. When switching the cameras, the second parameter may be a parameter which can be set to be identical when being supported by the switched camera, but set differently when not being supported thereby.

For example, in a case in which the resolution of the recorded video data corresponds to the first parameter, when the first camera module 231 is switched to the second camera module 232, the resolution of the second camera module 232 may be set identical to that of the first camera module 231. In a case in which the frame rate corresponds to the second parameter, when the first camera module 231 is switched to the second camera module 232, the second camera module 232 may have a frame rate different from that of the first camera module 231. For example, when the camera switching event has occurred while recording the first video data having a resolution of 800^{∗}600 and a frame rate of 60 fps via the first camera module 231 and the second camera module 232 supports a resolution of 800^{∗}600 but the above resolution supports a frame rate of 30 fps or less, the second camera module 232 may be set based on the second configuration information including a resolution of 800^{∗}600 and a frame rate of 30 fps.

If the second camera module 232 supports a resolution of 640^{∗}320 or less and the resolution is the first parameter, that is, a parameter which is essentially required to be identical when switching the cameras, the processor 210 may output, on the display 110, a guidance message that camera switching is not supported at this resolution (800^{∗}600).

According to an embodiment, after the switching to the second camera module 232 is completed, in operation 460, the electronic device 100 may record the second video data obtained via the second camera module 232 in response to a recording resumption event.

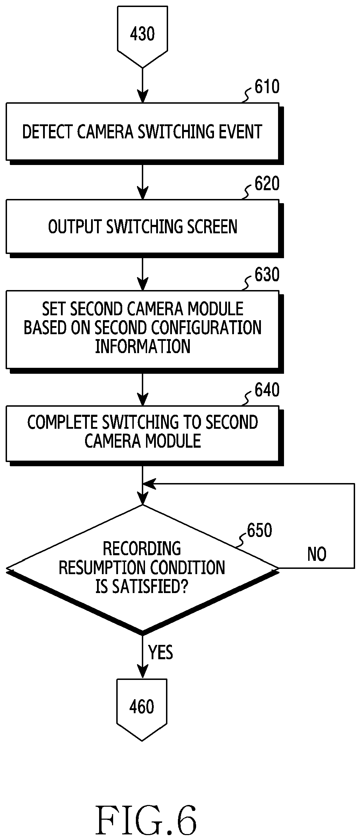

In an embodiment, the recording resumption event may be the same as the switching to the second camera module 232 is completed. That is, the processor 210 can resume video recording as soon as the switching to the second camera module 232 is completed. However, in various embodiments, the recording resumption event may be defined as satisfying various predesignated conditions which may occur after the switching to the second camera module 232 is completed. The recording resumption event will be described in detail later with reference to FIG. 6.

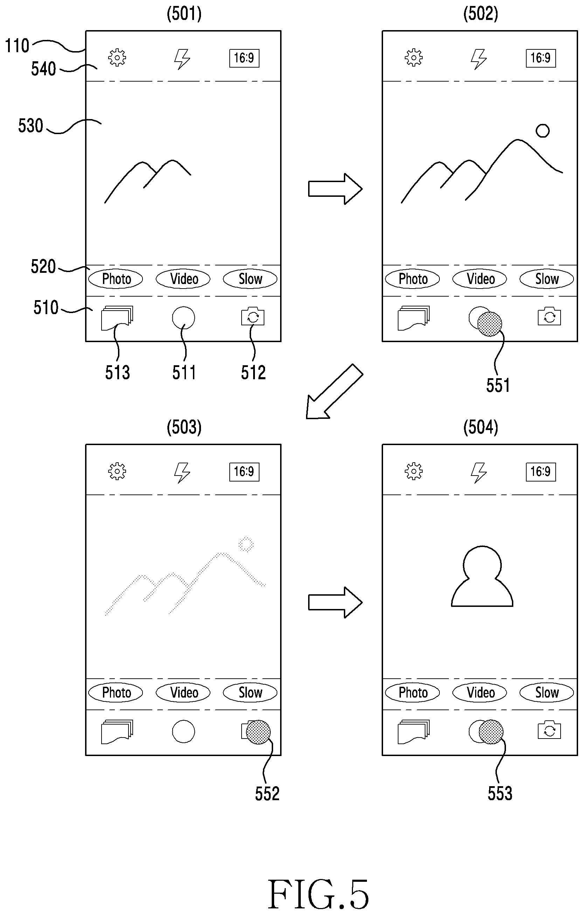

FIG. 5 illustrates a user interface output on a display of an electronic device according to an embodiment.

Referring to FIG. 5, a user interface such as the screen <501> may be output on the display 110 of the electronic device 100 when the application is executed.

In an embodiment, the user interface of the application may include a first area 510 in which a capturing icon 511, a camera switching icon 512, a recent image icon 513, and the like are arranged. In the disclosure, icons may be replaced with expressions such as a button, a menu, an object, and the like. The icons illustrated in the first area 510 of FIG. 5 are exemplary, and four or more icons may be arranged, or a random icon may be omitted or replaced with another icon.

In an embodiment, the user interface may include a second area 520 indicating the currently selected capturing mode or various capturing modes in which the application supports photographing, video recording, slow motion capturing, or the like. The user may change the capturing mode via the designated input allows. For example, the current screen <501> indicates the video capturing mode, but when the user input of sliding the display 110 from left to right is detected, the processor 210 may change the capturing mode to a photographing mode. The electronic device 100 may support three or more capturing modes, and various capturing modes (not illustrated) may be switched and displayed in the second area 520 via the user input described above.

In an embodiment, the user interface may include a third area 530 in which the currently captured image, such as a preview image, is displayed. The preview image and the real-time captured image may be output over other areas in addition to the third area 530. For example, when the electronic device 100 starts video recording, the items displayed in the second area 520 or a fourth area 540 may be unnecessary to be exposed to the user by the end of recording, and thus the real-time captured image may be output to an area including the second area 520 or the fourth area 540 in addition to the third area 530. The real-time captured image may be expanded to the first area 510. Some icons may maintain a display state of being superimposed on the real-time captured image.

In an embodiment, the user interface may include the fourth area 540 in which setting menus capable of setting configuration, flash, an aspect ratio, and the like are displayed. Parameters included in the configuration information may be set via the fourth area 540. For example, the user may select the setting icon included in the fourth area or select the aspect ratio icon so as to set the resolution, frame rate, filter, aspect ratio, or the like of the video to be recorded.

In an embodiment of FIG. 5, although it is illustrated that the first area 510, the second area 520, the third area 530, and the fourth area 540 remain in screens <501>, <502>, <503>, and <504> for convenience of description, some areas may be omitted or transformed depending on the application implementation method before/after the capturing starts, during the camera switching process, or the like.

According to an embodiment, the screen <501> may show a screen in a state of having entered the video recording mode after the camera application is executed. In the video recording mode, the electronic device 100 may output the preview image obtained via the first camera module 231 to the third area 530.

According to an embodiment, the screen <502> shows that an input for starting video recording using the first camera module 231 is obtained from the user. For example, when a user input 551 for selecting the capturing icon 511 is detected, the processor 210 may determine that the recording start event has occurred, and record the first video data obtained via the first camera module 231. While the first video data is recorded, the frame obtained via the first camera module 231 is output as a preview image in at least the third area 530.

According to an embodiment, the screen <503> shows that a camera switching event occurs while recording the first video data. For example, while recording the first video data, when a user input 552 for selecting the camera switching icon 512 is detected, the processor 210 may determine that the camera switching event has occurred. When it is determined that the camera switching event has occurred, the processor 210 may output a predefined switching screen on the display 110.

In an embodiment, the switching screen may be output to the entire area of the display 110, or may be output to a designated partial area thereof. For example, the switching screen may be output to the third area 530. In another example, the switching screen may be output to an area including the second area 520 and the third area 530. In addition, considering various factors such as the user interface of the application, the size of the display, the resolution of the video being recorded, and the like, the switching screen may be displayed in an appropriate area.

In an embodiment, the switching screen may be an image in which a predetermined effect is applied to a frame image of the most recently obtained first video data. For example, the processor 210 may output an image in which a blur effect is applied to the last frame (last reference frame) of the first video data as a switching screen in a predetermined area of the display 110.

In an embodiment, the switching screen may be an image pre-stored in the memory 220 of the electronic device 100. For example, when the camera switching event occurs, the application may output the pre-stored image to a predetermined area of the display 110. The pre-stored image may include a textual or graphic expression indicating that the camera switching is in progress.

In an embodiment, the switching screen may include text. For example, when the camera switching event occurs, the processor 210 may output, to the display 110, the text indicating that the camera is being switched.

According to an embodiment, the screen 504 may indicate that the second video data is recorded by the second camera module 232 after the camera switching is completed. In an embodiment, the second camera module 232 may be set based on the second configuration information which is at least partially identical to the first configuration information used when setting the first camera module 231 so that the second video data may be obtained while maintaining the same texture and the same setting as the first video data. While the second video data is being recorded by the second camera module 232, the preview image obtained by the second camera module 232 may be output on the display 110. The orientation of the image obtained by the second camera module 232 may be set based on the orientation of the image obtained by the first camera module 231. For example, the image obtained by the second camera module 232 may be flipped or reversed horizontally.

In an embodiment, when a user input 553 for selecting the capturing icon 511 is obtained while the second video data is being recorded, the processor 210 may stop the video recording and generate a video file based on the obtained first video data and second video data. In an embodiment, when audio data is obtained via a microphone during the video recording, the processor 210 may generate a video file (moving image file) based on the first video data, the second video data, and the audio data. The generated video file may be stored in the memory 220 of the electronic device 100.

FIG. 6 is a flowchart illustrating that the video recording resumes after a camera switching event occurs according to an embodiment.

FIG. 6 may be performed after the operation 430 of FIG. 4. Therefore, the description related to FIG. 4 may be applied to FIG. 6 in the same or corresponding manner.

In operation 610, the electronic device 100 may detect a camera switching event. When the camera switching event is detected, in operation 620, the electronic device 100 may output a switching screen to be output to the display 110 while the camera switching is being performed. For example, a predesignated image may be output to the display 110 as a switching screen.

In an embodiment, operation 630 and operation 640 may be performed while the switching screen of the operation 620 is output on the display 110.

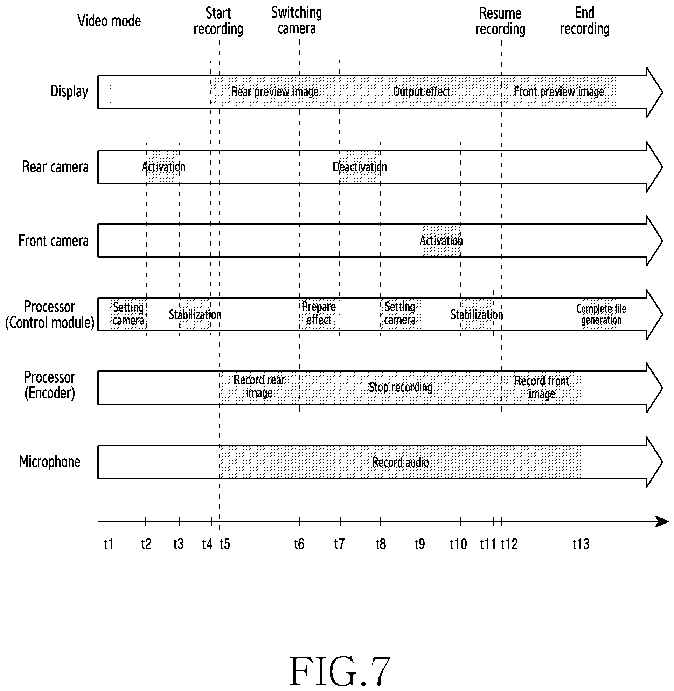

In an embodiment, even when a camera switching event occurs to switch the first camera module 231 to the second camera module 232, until the switching screen of the operation 620 is output, the image obtained by the first camera module 231 may be output on the display 110 as a preview image. The time point when the camera switching event occurs, the time point when the switching screen is output, and the time point when the first camera module 231 is deactivated will be described in detail with reference to FIG. 7.

Referring to FIG. 6, while the designated image is output, in operation 630, the processor 210 may set the second camera module based on the second configuration information. While the designated image is output, at operation 640, the processor 210 may complete the switching to the second camera module 232.

In an embodiment, in order to switch the camera module used for video recording from the first camera module 231 to the second camera module 232, the processor 210 may set the second camera module 232 based on the second configuration information and activate the second camera module 232 based on the setting value. The processor 210 may perform a stabilization operation for obtaining video data after the second camera module 232 is activated. In an embodiment, the stabilization operation may include auto exposure, auto focus, auto white balance, and the like. In an embodiment, the time point when the stabilization operation is completed may be referred to as the time point when the switching to the second camera module 232 is completed.

According to an embodiment, in operation 650, the electronic device 100 may determine whether or not a recording resumption condition is satisfied. When the recording resumption condition is satisfied, the process proceeds to the operation 460 and may start recording the second video data. When the recording resumption condition is not satisfied, even when the switching to the second camera module 232 is completed and the second video data recording is possible, it is possible to stand by without starting the second video data recording.

In an embodiment, the designated image output to the switching screen in the operation 620 may remain on the display 110 until the recording resumption condition is satisfied and the second video data recording is started. In another embodiment, when the camera module switching is completed in operation 640, the designated image is no longer output, and the preview image obtained by the second camera module 232 may be output on the display 110.

In an embodiment, a separate recording resumption condition may not be set. In this case, the recording resumption condition may mean that the switching of the camera module is completed. That is, in an embodiment, when the camera switching to the second camera module 232 is completed, the electronic device 100 may automatically start recording the second video data while replacing the switching screen with the preview image obtained by the second camera module 232.

In an embodiment, the recording resumption condition may be the acquisition of the designated user input. For example, the user may provide user input for resuming video recording at a suitable time point for resuming the video recording while confirming the preview image obtained by the second camera module 232. When the user input is obtained, the electronic device 100 may start recording the second video data from corresponding point.

In an embodiment, the recording resumption condition may be that the image frame obtained via the second camera module 232 satisfies a predetermined condition. For example, the processor 210 may perform scene analysis, object detection, face recognition, or the like on the image obtained via the second camera module 232, and resume recording video data when a predefined scene or object, a user's face, or the like is recognized.

In an embodiment, the processor 210 may select, as a frame for starting recording the second video data, a frame having a value in a range in which the value of the auto exposure or auto white balance of the image data obtained via the second camera module 232 is identical or can be considered to be identical to at least one of the auto exposure or auto white balance of the first video data obtained via the first camera module.

FIG. 7 is a view illustrating the video recording according to a flow of time according to an embodiment.

Referring to FIG. 7, after the application is executed, the application may enter a video mode at t1. The application may be basically set to capture using the rear camera 132. In the embodiment of FIG. 7, the rear camera 132 may be understood as the first camera module 231 described above.

In an embodiment, when entering the video mode, the camera setting of the first camera module 231 may be performed. For example, the processor 210 may set, based on the first configuration information, the rear camera 132. For example, the processor 210 may set the first camera module 231 via the capturing control module 310 and the device control module 320. The module controlled by the processor 210 may differ depending on the time of operation, and is collectively referred to as a control module. The operation of performing a function of recording the video data is performed by the encoder, and in FIG. 7, the operation of the encoder is displayed as a separate flow. The encoder may be implemented in hardware and/or software as described above.

In an embodiment, when the setting of the rear camera 132 is completed at t2, the electronic device 100 may activate the rear camera 132. In the disclosure, activating the camera may mean a state in which an image output from an image sensor of a camera module is recorded in a buffer. For example, the electronic device 100 may turn on the image data stream of the rear camera 132 so as to record the data output from the image sensor in the buffer.

In an embodiment, when the rear camera 132 is activated, the processor 210 may perform a stabilization operation on the rear camera 132 at t3. For example, auto exposure, auto focus, auto white balance, and other appropriate control operations to prepare capturing may be performed.

When the video mode is entered and the rear camera 132 is stabilized, the preview image obtained by the rear camera 132 may be continuously output on the display 110. Normally, it may take a short time of several tens to several hundreds of milliseconds for the rear camera 132 to be stabilized after entering the video mode.

In an embodiment, when the stabilization operation of the rear camera 132 is completed at t4, the electronic device 100 may detect the recording start event at t5. In response to the recording start event, the encoder may record a rear image, that is, the first video data obtained via the rear camera 132. For example, the processor 210 may generate a video file in response to the recording start event and start recording the first video data in the generated video file. For example, the processor 210 may generate a video file when detecting the recording start event, record metadata such as the capturing time, capturing location, and device information of the rear camera 132 in the header area of the video file, and start recording the first video data in a payload area.

In an embodiment, in response to the recording start event, the electronic device 100 may activate at least one microphone included in the electronic device 100 to start audio recording. When the electronic device 100 includes two or more microphones, the electronic device 100 may appropriately adjust the gain so that the audio data corresponding to the direction in which the rear camera 132 faces is well recorded, and set directivity to be high via beam-forming of the microphone. While the rear image is being recorded, the display 110 may continue to display the preview image obtained via the rear camera 132.

In an embodiment, a camera switching event may occur at t6. When sensing the camera switching event, the processor 210 may prepare a switching effect to be output on the display 110.

In an embodiment, while the switching effect is being prepared, the preview image obtained via the rear camera 132 may be temporarily maintained on the display 110 despite the camera switching event. The recording of the rear image obtained via the rear camera 132 may be stopped at t6.

In an embodiment, when the preparation of the switching effect is completed at t7, the electronic device 100 may output the switching effect prepared on the display 110 and deactivate the rear camera 132. For example, the electronic device 100 may turn off the image data stream of the rear camera 132, store the final setting of the rear camera 132, and cut off the power supplied to the rear camera 132. In another embodiment, the electronic device may only turn off the image data stream described above and maintain the power supplied to the rear camera 132. In a case of maintaining the power supplied to the rear camera 132 despite the camera switching, when the user re-switches the camera from the front camera 131 to the rear camera 132, the loading speed of the rear camera 132 may be improved.

In an embodiment, the preview image obtained via the rear camera 132 is no longer output on the display 110, and the switching effect may be maintained until the recording resumption event occurs.

In an embodiment, the processor 210 may deactivate the rear camera 132 and start the camera setting of the front camera 131 at t8. The front camera 131 may be understood as the second camera module 232. In another embodiment, the processor 210 may perform the deactivation of the rear camera 132 and the camera setting of the front camera 131 in a parallel manner. For example, even when the deactivation of the rear camera 132 is completed at t8, the processor 210 may start the camera setting of the front camera 131 between t7 and t8.

In an embodiment, the camera setting of the front camera 131 may be completed at t9. The processor 210 may complete the camera setting of the front camera 131, based on the second setting value which is at least partially identical to the first setting value used for the camera setting of the rear camera 132. Here, the setting value may be understood as a concept corresponding to the configuration information described above.

In an embodiment, when the setting of the front camera 131 is completed at t9, the electronic device 100 may activate the front camera 131. As described above, as the front camera 131 is activated, the electronic device 100 may record the image output from the image sensor of the front camera 131 in the buffer. For example, the electronic device 100 may turn on the image data stream of the front camera 131 so as to record the data output from the image sensor of the front camera 131 in the buffer.

In an embodiment, when the activation of the front camera 131 is completed at t10, the processor 210 may perform the stabilization operation of the front camera 131.

In an embodiment, after the stabilization operation of the front camera 131 is completed at t11, the recording resumption event may occur at t12. Referring to FIG. 6, as described above, t12 may have the same value as t11 when a separate record resumption event is not set. The front preview image obtained via the front camera 131 may be output on the display 110 after t12, but may be output on the display 110 after t11 which is a time point that the stabilization operation is completed.

Referring to FIG. 7, the time from t6 to t12 corresponds to a section in which the video recording is stopped according to the camera switching. Even when the video recording is stopped, the acquisition of audio data via the microphone may be continuously maintained. In an embodiment, while the camera switching is being performed, the electronic device 100 may adjust the gain so that the audio data corresponding to the direction in which the front camera 131 faces is well recorded, and may adjust the beam-forming of the microphone to a value different from that before the camera switching event.

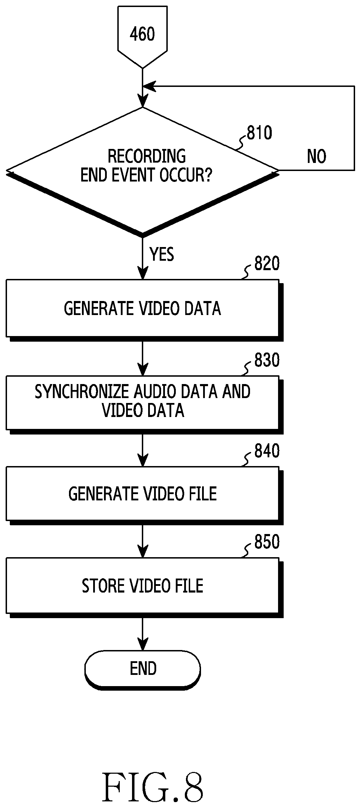

In the process of completing the generation of the video file after the end of the video recording, the audio data obtained between t6 and t12 may be deleted or appropriately synchronized with the first video data and the second video data. The synchronization between the audio data and the video data will be described later with reference to FIG. 8.

In an embodiment, when the recording resumption event occurs at t12, the encoder may record the front image obtained by the front camera 131 as the second video data. The encoder may resume recording a video (moving image) so that the front image obtained by the front camera 131 is continuous with the rear image the recording of which is paused. For example, in the video file in which the first video data was being recorded, the processor 210 may record the first video data and the second video data in the payload area of the video file so as to be continuously recorded. In the disclosure, the continuous recording of the first video data and the second video data may mean that the first frame of the second video data is recorded to be played continually after the last frame of the first video data when playing a video file which has recorded the first video data and the second video data.

In an embodiment, when the recording end event occurs at t13, the encoder may also stop the recording of the front image, and the microphone may also stop the recording of the audio data. The processor 210 may complete the generation of the moving image file, based on the first video data, the second video data, and the audio data obtained from t5 which is a time point of the video recording start to t13 which is a time point of the video recording end.

FIG. 8 is a flowchart illustrating a method for generating and storing a video file according to an embodiment.

The process of FIG. 8 may be performed after the operation 460 of FIG. 4.

According to an embodiment, in operation 810, the electronic device 100 may detect the occurrence of the recording end event. The recording end event may be variously defined. In an embodiment, the recording end event may be an explicit recording end input obtained from the user. For example, the detection of selection of buttons and icons mapped to the recording end, a voice input, or the like may correspond to the recording end event. In another embodiment, the recording end event may be the expiration of a preset recording time. For example, when 10-minute moving image recording is set before the start of recording, the time point when the recording time of the first video data and the second video data passes 10 minutes may be the time point when the recording end event occurs. In still another embodiment, the recording end event may correspond to the occurrence of various situations in which recording cannot be sustained, for example, the remaining battery level below a predetermined level (e.g., 5%), the incoming call during video data recording, and the like.

According to an embodiment, when the recording end event occurs, in the operation 820, video data based on the first video data and the second video data may be generated. In an embodiment, the generated video data may include time stamp (presentation time stamp (PTS)) information of the entire section from the start time point to the end time point of the video recording. In this case, the corresponding video data for the time stamp corresponding to the section in which the camera switching is performed may not exist. In another embodiment, the generated video data may include time stamp information of sections from a video recording start time point to a camera switching time point, and from a recording resumption time point to a recording end time point. In this case, since there is no time stamp of the section where the camera switching is performed, the generated video data (frame) and the time stamp may correspond to each other one-to-one.

According to an embodiment, in operation 830, the processor 210 may synchronize the audio data, which is obtained while obtaining the video data, with the generated video data.

In an embodiment, the processor 210 may delete the audio data corresponding to the section in which the camera switching is performed, and may use, for synchronization, only the audio data corresponding to the actual time when the first video data and the second video data are obtained. For example, in FIG. 7, the audio data between t6 and t12 may be deleted, the audio data between t5 and t6 may be synchronized with the first video data (that is, a rear image data), and the audio data between t12 and t13 may be synchronized with the second video data (that is, a front image data).

In an embodiment, the processor 210 may maintain the audio data corresponding to the section where the camera switching is performed, and add appropriate video data to the section where the camera switching is performed. For example, the processor 210 may apply a fade-out effect to the frame corresponding to t6 of the first video data for a first time, and apply a fade-in effect to the frame corresponding to t12 of the second video data for a second time. The sum of the first time and the second time may be equal to or relatively shorter than the time between t6 and t12.

In an embodiment, an effect similar to that of the video data may be applied to the audio data between t6 and t12. For example, the volume of the audio data during the first time after t6 may be gradually reduced to correspond to the fade-out effect applied to the last frame of the first video data. The volume of the audio data during the second time before t12 may be gradually increased to correspond to the fade-in effect applied to the initial frame of the second video data.

The effects applied to the video data and audio data described with reference to FIG. 8 are exemplary, and an appropriate effect may be applied in an alternative or additional manner so as to smoothly switch screen and the naturally provide audio data.

When the audio data and the video data are synchronized, in operation 840, a video file may be generated. The generated video file may be stored in the memory 220 of the electronic device 100 or the like in operation 850.

Via the hardware configuration, software implementation, operation flow, exemplary user interface, timing of each operation described with reference to FIG. 1 to FIG. 8, the user can freely generate and store the video file while switching the camera which is recording, without the need to generate video data using the front camera 131 and video data using the rear camera 132, respectively, and integrate the video through post-image processing work.

In the following, the devices to which the various embodiments disclosed herein may be applied or extended with reference to FIGS. 9 and 10 will be embodied and extended.

Fig. 9 is a block diagram illustrating an electronic device 901 in a network environment 900 according to various embodiments. Referring to Fig. 9, the electronic device 901 in the network environment 900 may communicate with an electronic device 902 via a first network 998 (e.g., a short-range wireless communication network), or an electronic device 904 or a server 908 via a second network 999 (e.g., a long-range wireless communication network). According to an embodiment, the electronic device 901 may communicate with the electronic device 904 via the server 908. According to an embodiment, the electronic device 901 may include a processor 920, memory 930, an input device 950, a sound output device 955, a display device 960, an audio module 970, a sensor module 976, an interface 977, a haptic module 979, a camera module 980, a power management module 988, a battery 989, a communication module 990, a subscriber identification module(SIM) 996, or an antenna module 997. In some embodiments, at least one (e.g., the display device 960 or the camera module 980) of the components may be omitted from the electronic device 901, or one or more other components may be added in the electronic device 901. In some embodiments, some of the components may be implemented as single integrated circuitry. For example, the sensor module 976 (e.g., a fingerprint sensor, an iris sensor, or an illuminance sensor) may be implemented as embedded in the display device 960 (e.g., a display).

The processor 920 may execute, for example, software (e.g., a program 940) to control at least one other component (e.g., a hardware or software component) of the electronic device 901 coupled with the processor 920, and may perform various data processing or computation. According to one embodiment, as at least part of the data processing or computation, the processor 920 may load a command or data received from another component (e.g., the sensor module 976 or the communication module 990) in volatile memory 932, process the command or the data stored in the volatile memory 932, and store resulting data in non-volatile memory 934. According to an embodiment, the processor 920 may include a main processor 921 (e.g., a central processing unit (CPU) or an application processor (AP)), and an auxiliary processor 923 (e.g., a graphics processing unit (GPU), an image signal processor (ISP), a sensor hub processor, or a communication processor (CP)) that is operable independently from, or in conjunction with, the main processor 921. Additionally or alternatively, the auxiliary processor 923 may be adapted to consume less power than the main processor 921, or to be specific to a specified function. The auxiliary processor 923 may be implemented as separate from, or as part of the main processor 921.

The auxiliary processor 923 may control at least some of functions or states related to at least one component (e.g., the display device 960, the sensor module 976, or the communication module 990) among the components of the electronic device 901, instead of the main processor 921 while the main processor 921 is in an inactive (e.g., sleep) state, or together with the main processor 921 while the main processor 921 is in an active state (e.g., executing an application). According to an embodiment, the auxiliary processor 923 (e.g., an image signal processor or a communication processor) may be implemented as part of another component (e.g., the camera module 980 or the communication module 990) functionally related to the auxiliary processor 923.

The memory 930 may store various data used by at least one component (e.g., the processor 920 or the sensor module 976) of the electronic device 901. The various data may include, for example, software (e.g., the program 940) and input data or output data for a command related thererto. The memory 930 may include the volatile memory 932 or the non-volatile memory 934.

The program 940may be stored in the memory 930 as software, and may include, for example, an operating system (OS) 942, middleware 944, or an application 946.

The input device 950 may receive a command or data to be used by other component (e.g., the processor 920) of the electronic device 901, from the outside (e.g., a user) of the electronic device 901. The input device 950 may include, for example, a microphone, a mouse, a keyboard, or a digital pen (e.g., a stylus pen).

The sound output device 955 may output sound signals to the outside of the electronic device 901. The sound output device 955 may include, for example, a speaker or a receiver. The speaker may be used for general purposes, such as playing multimedia or playing record, and the receiver may be used for an incoming calls. According to an embodiment, the receiver may be implemented as separate from, or as part of the speaker.

The display device 960 may visually provide information to the outside (e.g., a user) of the electronic device 901. The display device 960 may include, for example, a display, a hologram device, or a projector and control circuitry to control a corresponding one of the display, hologram device, and projector. According to an embodiment, the display device 960 may include touch circuitry adapted to detect a touch, or sensor circuitry (e.g., a pressure sensor) adapted to measure the intensity of force incurred by the touch.

The audio module 970 may convert a sound into an electrical signal and vice versa. According to an embodiment, the audio module 970 may obtain the sound via the input device 950, or output the sound via the sound output device 955 or a headphone of an external electronic device (e.g., an electronic device 902) directly (e.g., wiredly) or wirelessly coupled with the electronic device 901.

The sensor module 976 may detect an operational state (e.g., power or temperature) of the electronic device 901 or an environmental state (e.g., a state of a user) external to the electronic device 901, and then generate an electrical signal or data value corresponding to the detected state. According to an embodiment, the sensor module 976 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 977 may support one or more specified protocols to be used for the electronic device 901 to be coupled with the external electronic device (e.g., the electronic device 902) directly (e.g., wiredly) or wirelessly. According to an embodiment, the interface 977 may include, for example, a high definition multimedia interface (HDMI), a universal serial bus (USB) interface, a secure digital (SD) card interface, or an audio interface.

A connecting terminal 978 may include a connector via which the electronic device 901 may be physically connected with the external electronic device (e.g., the electronic device 902). According to an embodiment, the connecting terminal 978 may include, for example, a HDMI connector, a USB connector, a SD card connector, or an audio connector (e.g., a headphone connector).

The haptic module 979 may convert an electrical signal into a mechanical stimulus (e.g., a vibration or a movement) or electrical stimulus which may be recognized by a user via his tactile sensation or kinesthetic sensation. According to an embodiment, the haptic module 979 may include, for example, a motor, a piezoelectric element, or an electric stimulator.

The camera module 980 may capture a still image or moving images. According to an embodiment, the camera module 980 may include one or more lenses, image sensors, image signal processors, or flashes.

The power management module 988 may manage power supplied to the electronic device 901. According to one embodiment, the power management module 988 may be implemented as at least part of, for example, a power management integrated circuit (PMIC).

The battery 989 may supply power to at least one component of the electronic device 901. According to an embodiment, the battery 989 may include, for example, a primary cell which is not rechargeable, a secondary cell which is rechargeable, or a fuel cell.

The communication module 990 may support establishing a direct (e.g., wired) communication channel or a wireless communication channel between the electronic device 901 and the external electronic device (e.g., the electronic device 902, the electronic device 904, or the server 908) and performing communication via the established communication channel. The communication module 990 may include one or more communication processors that are operable independently from the processor 920 (e.g., the application processor (AP)) and supports a direct (e.g., wired) communication or a wireless communication. According to an embodiment, the communication module 990 may include a wireless communication module 992 (e.g., a cellular communication module, a short-range wireless communication module, or a global navigation satellite system (GNSS) communication module) or a wired communication module 994 (e.g., a local area network (LAN) communication module or a power line communication (PLC) module). A corresponding one of these communication modules may communicate with the external electronic device via the first network 998 (e.g., a short-range communication network, such as Bluetooth^{™}, wireless-fidelity (Wi-Fi) direct, or infrared data association (IrDA)) or the second network 999 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 992 may identify and authenticate the electronic device 901 in a communication network, such as the first network 998 or the second network 999, using subscriber information (e.g., international mobile subscriber identity (IMSI)) stored in the subscriber identification module 996.

The antenna module 997 may transmit or receive a signal or power to or from the outside (e.g., the external electronic device) of the electronic device 901. According to an embodiment, the antenna module 997 may include an antenna including a radiating element composed of a conductive material or a conductive pattern formed in or on a substrate (e.g., PCB). According to an embodiment, the antenna module 997 may include a plurality of antennas. In such a case, at least one antenna appropriate for a communication scheme used in the communication network, such as the first network 998 or the second network 999, may be selected, for example, by the communication module 990 (e.g., the wireless communication module 992) from the plurality of antennas. The signal or the power may then be transmitted or received between the communication module 990 and the external electronic device via the selected at least one antenna. According to an embodiment, another component (e.g., a radio frequency integrated circuit (RFIC)) other than the radiating element may be additionally formed as part of the antenna module 997.

At least some of the above-described components may be coupled mutually and communicate signals (e.g., commands or data) therebetween via an interperipheral communication scheme (e.g., a bus, general purpose input and output (GPIO), serial peripheral interface (SPI), or mobile industry processor interface (MIPI)).

According to an embodiment, commands or data may be transmitted or received between the electronic device 901 and the external electronic device 904 via the server 908 coupled with the second network 999. Each of the electronic devices 902 and 904 may be a device of a same type as, or a different type, from the electronic device 901. According to an embodiment, all or some of operations to be executed at the electronic device 901 may be executed at one or more of the external electronic devices 902, 904, or 908. For example, if the electronic device 901 should perform a function or a service automatically, or in response to a request from a user or another device, the electronic device 901, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 901. The electronic device 901 may provide the outcome, with or without further processing of the outcome, as at least part of a reply to the request. To that end, a cloud computing, distributed computing, or client-server computing technology may be used, for example.

Fig. 10 is a block diagram 1000 illustrating the camera module 980 according to various embodiments. Referring to Fig. 10, the camera module 980 may include a lens assembly 1010, a flash 1020, an image sensor 1030, an image stabilizer 1040, memory 1050 (e.g., buffer memory), or an image signal processor 1060. The lens assembly 1010 may collect light emitted or reflected from an object whose image is to be taken. The lens assembly 1010 may include one or more lenses. According to an embodiment, the camera module 980 may include a plurality of lens assemblies 1010. In such a case, the camera module 980 may form, for example, a dual camera, a 360-degree camera, or a spherical camera. Some of the plurality of lens assemblies 1010 may have the same lens attribute (e.g., view angle, focal length, auto-focusing, f number, or optical zoom), or at least one lens assembly may have one or more lens attributes different from those of another lens assembly. The lens assembly 1010 may include, for example, a wide-angle lens or a telephoto lens.

The flash 1020 may emit light that is used to reinforce light reflected from an object. According to an embodiment, the flash 1020 may include one or more light emitting diodes (LEDs) (e.g., a red-green-blue (RGB) LED, a white LED, an infrared (IR) LED, or an ultraviolet (UV) LED) or a xenon lamp. The image sensor 1030 may obtain an image corresponding to an object by converting light emitted or reflected from the object and transmitted via the lens assembly 1010 into an electrical signal. According to an embodiment, the image sensor 1030 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 1030 may be implemented using, for example, a charged coupled device (CCD) sensor or a complementary metal oxide semiconductor (CMOS) sensor.

The image stabilizer 1040 may move the image sensor 1030 or at least one lens included in the lens assembly 1010 in a particular direction, or control an operational attribute (e.g., adjust the read-out timing) of the image sensor 1030 in response to the movement of the camera module 980 or the electronic device 901 including the camera module 980. This allows compensating for at least part of a negative effect (e.g., image blurring) by the movement on an image being captured. According to an embodiment, the image stabilizer 1040 may sense such a movement by the camera module 980 or the electronic device 901 using a gyro sensor (not shown) or an acceleration sensor (not shown) disposed inside or outside the camera module 980. According to an embodiment, the image stabilizer 1040 may be implemented, for example, as an optical image stabilizer. The memory 1050 may store, at least temporarily, at least part of an image obtained via the image sensor 1030 for a subsequent image processing task. For example, if image capturing is delayed due to shutter lag or multiple images are quickly captured, a raw image obtained (e.g., a Bayer-patterned image, a high-resolution image) may be stored in the memory 1050, and its corresponding copy image (e.g., a low-resolution image) may be previewed via the display device 960. Thereafter, if a specified condition is met (e.g., by a user's input or system command), at least part of the raw image stored in the memory 1050 may be obtained and processed, for example, by the image signal processor 1060. According to an embodiment, the memory 1050 may be configured as at least part of the memory 930 or as a separate memory that is operated independently from the memory 930.

The image signal processor 1060 may perform one or more image processing with respect to an image obtained via the image sensor 1030 or an image stored in the memory 1050. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 1060 may perform control (e.g., exposure time control or read-out timing control) with respect to at least one (e.g., the image sensor 1030) of the components included in the camera module 980. An image processed by the image signal processor 1060 may be stored back in the memory 1050 for further processing, or may be provided to an external component (e.g., the memory 930, the display device 960, the electronic device 902, the electronic device 904, or the server 908) outside the camera module 980. According to an embodiment, the image signal processor 1060 may be configured as at least part of the processor 920, or as a separate processor that is operated independently from the processor 920. If the image signal processor 1060 is configured as a separate processor from the processor 920, at least one image processed by the image signal processor 1060 may be displayed, by the processor 920, via the display device 960 as it is or after being further processed.

According to an embodiment, the electronic device 901 may include a plurality of camera modules 980 having different attributes or functions. In such a case, at least one of the plurality of camera modules 980 may form, for example, a wide-angle camera and at least another of the plurality of camera modules980 may form a telephoto camera. Similarly, at least one of the plurality of camera modules 980 may form, for example, a front camera and at least another of the plurality of camera modules980 may form a rear camera.

An electronic device according to an embodiment may include: a display; a first camera module; a second camera module; a memory; and at least one processor electrically connected to the display, the first camera module, the second camera module, and the memory, wherein the at least one processor: executes a first application associated with the first camera module and the second camera module; sets the first camera module, based on the first configuration information in response to entering a video recording mode; records first video data obtained via the first camera module in a video file in response to the recording start event (recording event); outputs a designated image on the display in response to a camera switching event which occurs while recording the first video data; while the designated image is output on the display, (1) stops recording the first video data via the first camera module and (2) sets the second camera module, based on second configuration information at least partially identical to the first configuration information; and continuously records, on the first video data of the video file, second video data obtained via the second camera module in response to a recording resumption event.

According to an embodiment, the first configuration information may include at least one of a resolution, a frame rate, and a filter to be applied to the first video data.

According to an embodiment, the at least one processor may: set the second camera module, based on a first resolution defined in the first configuration information; and record second video data having the first resolution.

According to an embodiment, the at least one processor may be configured to: generate the video file, based on the first video data and the second video data in response to a recording end event; and store the generated video file in the memory.

According to an embodiment, the at least one processor may output a first preview image obtained by the first camera module on the display from the time point of entering the video recording mode until the designated image is displayed.

According to an embodiment, the at least one processor may output a second preview image obtained by the second camera module on the display from the time point when the recording resumption event occurs.

According to an embodiment, the at least one processor may generate the designated image, based on the image obtained by the first camera module before the camera switching event occurs. The designated image may be generated, based on an image pre-stored in the memory or a predefined text.

According to an embodiment, the at least one processor may determine that the recording resumption event has occurred if a designated condition is satisfied after the second camera module is set based on the second configuration information. The designated condition may include at least one of (1) a user input and (2) a scene analysis result of the frame obtained by the second camera module.

According to an embodiment, the first camera module may be disposed on a rear surface of the electronic device facing a first direction, and the second camera module may be disposed on a front surface of the electronic device facing a second direction opposite to the first direction.

According to an embodiment, the first configuration information may include an essential parameter having a first value, and at least one processor may define the essential parameter of the second configuration information as the first value.

A moving image capturing method of an electronic device according to an embodiment may include executing a first application associated with a first camera module and a second camera module of the electronic device, setting the first camera module, based on first configuration information in response to entering a video recording mode, recording first video data obtained via the first camera module on a video file in response to a recording start event, outputting a designated image on the display in response to a camera switching event which occurs while recording the first video data, while the designated image is output on the display, (1) stopping recording the first video data via the first camera module and (2) setting the second camera module, based on second configuration information at least partially identical to the first configuration information, and continuously recording, on the first video data of the video file, second video data obtained via the second camera module in response to a recording resumption event.

According to an embodiment, the moving image capturing method may further include generating the video file, based on the first video data and the second video data in response to a recording end event, and storing the generated video file in the memory of the electronic device.

According to an embodiment, the setting the second camera module of the moving image capturing method may include setting the second camera module, based on a first resolution defined in the first configuration information, and the recording the second video data may include recording second video data having the first resolution.

According to an embodiment, an electronic device may include: a housing; a display; a first camera module including a first lens set; a second camera module including a second lens set; a processor operatively connected to the first camera module and the second camera module; and a memory operatively connected to the processor, wherein when the memory stores instructions whereby the processor, at the time of execution: obtain a first image via the first camera module, based on a first setting value mapped to the first camera module in response to a moving image capturing request; generate a preview image, based on the obtained first image and display same on the display; record the first image as a moving image; receive an input requesting a switch to the second camera module during the recording of the first image; pause the video recording in response to the received input; provide a switching effect image as a preview image; switch same to the second camera module; adjust the first setting value to a second setting value mapped to the second camera module in response to the switching to the second camera module; after the adjustment is completed, obtain a second image via the second camera module, based on the second setting value; and provide a preview image, based on the obtained second image and record the second image to be continuous with the paused first image so as to resume recording the video.

According to an embodiment, the processor may determine the second setting value, based on at least a part of the first setting value in response to the switching.

According to an embodiment, the processor may set an orientation of the second image, based on an orientation of the first image.

According to an embodiment, the electronic device may further include at least one microphone, wherein the processor adjusts at least one of gain and directivity of the at least one microphone to obtain audio data corresponding to the second image in response to the switching.

According to an embodiment, the processor may select a frame which satisfies the designated condition among the frames obtained via the second camera module as a frame which is continuous with the first image.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 940) including one or more instructions that are stored in a storage medium (e.g., internal memory 936 or external memory 938) that is readable by a machine (e.g., the electronic device 901). For example, a processor (e.g., the processor 920) of the machine (e.g., the electronic device 901) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a display;
a first camera module;
a second camera module;
a memory; and
at least one processor electrically connected to the display, the first camera module, the second camera module, and the memory,
wherein the at least one processor:
executes a first application associated with the first camera module and the second camera module;
sets the first camera module, based on first configuration information in response to entering a video recording mode;
records first video data obtained via the first camera module on a video file in response to a recording event;
outputs a designated image on the display in response to a camera switching event which occurs while recording the first video data;
while the designated image is output on the display, (1) stops recording the first video data via the first camera module and (2) sets the second camera module, based on second configuration information at least partially identical to the first configuration information; and
continuously records, on the first video data of the video file, second video data obtained via the second camera module in response to a recording resumption event.

2. The electronic device of claim 1, wherein the first configuration information includes at least one of a resolution, a frame rate, and a filter to be applied to the first video data.

3. The electronic device of claim 1, wherein the at least one processor:
sets the second camera module, based on a first resolution defined in the first configuration information; and
records second video data having the first resolution.

4. The electronic device of claim 1, wherein the at least one processor is configured to:
generate the video file, based on the first video data and the second video data in response to a recording end event; and
store the generated video file in the memory.

5. The electronic device of claim 1, wherein the at least one processor outputs a first preview image obtained by the first camera module on the display from the time point of entering the video recording mode until the designated image is displayed.

6. The electronic device of claim 1, wherein the at least one processor outputs a second preview image obtained by the second camera module on the display from the time point when the recording resumption event occurs.

7. The electronic device of claim 1, wherein the at least one processor generates the designated image, based on the image obtained by the first camera module before the camera switching event occurs.

8. The electronic device of claim 1, wherein the designated image is generated, based on an image pre-stored in the memory or a predefined text.

9. The electronic device of claim 1, wherein the at least one processor determines that the recording resumption event has occurred if a designated condition is satisfied after the second camera module is set based on the second configuration information.

10. The electronic device of claim 9, wherein the designated condition includes at least one of (1) a user input and (2) a scene analysis result of the frame obtained by the second camera module.

11. The electronic device of claim 1, wherein the first camera module is disposed on a rear surface of the electronic device facing a first direction, and
the second camera module is disposed on a front surface of the electronic device facing a second direction opposite to the first direction.

12. The electronic device of claim 1, wherein the first configuration information includes an essential parameter having a first value, and
at least one processor defines the essential parameter of the second configuration information as the first value.

13. A moving image capturing method of an electronic device, the moving image capturing method comprising:
executing a first application associated with a first camera module and a second camera module of the electronic device;
setting the first camera module, based on first configuration information, in response to entering a video recording mode;
recording first video data obtained via the first camera module on a video file in response to a recording event;
outputting a designated image on the display of the electronic device in response to a camera switching event which occurs while recording the first video data;
while the designated image is output on the display, (1) stopping recording the first video data via the first camera module and (2) setting the second camera module, based on second configuration information at least partially identical to the first configuration information; and
continuously recording, on the first video data of the video file, second video data obtained via the second camera module in response to a recording resumption event.

14. The moving image capturing method of claim 13, further comprising:
generating the video file, based on the first video data and the second video data, in response to a recording end event, and
storing the generated video file in the memory of the electronic device.

15. The moving image capturing method of claim 13, wherein the setting the second camera module comprises setting the second camera module, based on a first resolution defined in the first configuration information, and
wherein the recording the second video data comprises recording second video data having the first resolution.
